# EUROPÄISCHE PATENTSCHRIFT

(11) **EP 1 526 308 B1**
(45) Veröffentlichungstag und Bekanntmachung des Hinweises auf die Patenterteilung: **02.05.2007**
(21) Anmeldenummer: 03023922.2
(22) Anmeldetag: 21.10.2003
(51) Int. Cl.: F16H 57/02

(54) **Lagervorrichtung, insbesondere für ein Getriebe**
Bearing apparatus, in particular for a gearing
Dispositif de palier, notamment pour une transmission

(43) Veröffentlichungstag der Anmeldung: 27.04.2005
(73) Patentinhaber: SIEMENS AKTIENGESELLSCHAFT, 80333 München (DE)
(72) Erfinder: Keller, Roland, 97241 Bergtheim (DE); Kraft, Ekkehard, 97282 Retzstadt (DE); Fees, Heiner, 74321 Bietigheim-Bissingen (DE)

(56) Entgegenhaltungen:
- EP-A- 0 403 284
- DE-A- 10 027 911
- DE-A- 19 537 503
- US-A- 4 748 865
- US-A- 5 566 592
- US-A- 6 003 397

## Beschreibung

Die Erfindung betrifft eine Lagervorrichtung für mindestens zwei koaxial rotierbare Teile, welche in und/oder an einem Gehäuseteil, insbesondere eines Getriebes, gelagert sind.

Getriebegehäuse, insbesondere für Antriebe mit kleinerer Leistung, beispielsweise elektromotorische Hilfsantriebe in Kraftfahrzeugen, sind häufig aus Kunststoff gefertigt. Zur Lagerung einer Welle im Gehäuse ist häufig eine Nabe aus Metall vorgesehen. Die axiale Mindestausdehnung der Nabe ist unter anderem durch die Kräfte bestimmt, die über die Nabe in das Kunststoffgehäuse einzuleiten sind, wobei der kritischste Bereich die Verbindung der Nabe mit dem Kunststoffgehäuse ist. Die Bauraumhöhe, d.h. axiale Ausdehnung, des Getriebes hängt somit wesentlich nicht nur von der Anzahl und Dimensionierung der koaxial zur Welle rotierbaren Teile im Getriebe sondern auch von den vom Getriebegehäuse aufzunehmenden Kräften ab.

Das aus dem Dokument US 4,748,865, welcher die merkmale des Oberbegriffs offenbart, bekannte Getriebegehäuse beinhaltet eine Lagervorrichtung für ein Schneckengetriebe mit einer zentralen zylindrischen Lagernabe. Auf der Innenseite der Lagernabe ist die Antriebswelle des Schneckengetriebes gelagert. Auf der Außenseite der Lagernabe ist das Schneckenrad gelagert.
Die Lagernabe ist hierbei vollständig aus dem Kunststoffmaterial des Getriebegehäuses einstückig mit diesem ausgeformt.

Aus dem Dokument EP 0 403 284 A1 ist eine weitere Ausführung eines Getriebegehäuses mit einer zentralen Lagerstelle bekannt. Zur Verstärkung der Lagerstelle des aus Kunststoff bestehenden Gehäuses ist dort eine Metallplatte im Kunststoff eingeschlossen.
Die Metallplatte weist einen vorstehenden zylinderförmigen Teil im Bereich der Lagerstelle auf und erstreckt sich mit einem flachen Teil entlang der Seitenfläche des Getriebegehäuses vom Ansatz des vorstehenden Teils zum äußeren Umfang des Getriebegehäuses und teilweise über diesen hinaus bis in Befestigungslaschen des Gehäuses hinein, um die Lagerkräfte aufzunehmen.

Der Erfindung liegt die Aufgabe zugrunde, eine besonders kompakt aufgebaute Lagervorrichtung, insbesondere für ein Getriebe, anzugeben, welche ein Gehäuseteil aus Kunststoff umfasst, in und/oder an welchem mehrere koaxial rotierbare Teile gelagert sind.

Diese Aufgabe wird erfindungsgemäß gelöst durch eine Lagervorrichtung mit den Merkmalen des Anspruchs 1. Hierbei ist an einem Gehäuseteil aus Kunststoff eine Lagerbuchse aus Metall gehalten, welche einen im wesentlichen zylindermantelförmigen Ringabschnitt sowie einen an diesen anschließenden Radialabschnitt umfasst. Innerhalb des Ringabschnitts ist eine innere Welle an einer ersten Lagerstelle geführt. Ein zweiter, radial außerhalb der inneren Welle angeordneter äußerer Rotationskörper ist an einer zweiten Lagerstelle der Lagerbuchse geführt. Zur Verbindung des Gehäuseteils mit der Lagerbuchse ist ausschließlich oder überwiegend deren Radialabschnitt vorgesehen. Dazu ist zumindest der Radialabschnitt der Lagerbuchse in das Gehäuseteil eingespritzt, welches sich in diesem Bereich senkrecht zur Welle erstreckt. Die Krafteinleitung von der Lagerbuchse in das Gehäuseteil am Radialabschnitt ermöglicht eine großdimensionierte Gestaltung der kraftübertragenden Teile ohne zusätzlichen axialen Bauraumbedarf. Der im Wesentlichen senkrecht zur Welle angeordnete Radialabschnitt der Lagerbuchse nutzt damit zur spannungsarmen Krafteinleitung in das Gehäuse statt der Gehäusehöhe zumindest überwiegend die Gehäusebreite, ohne diese zu vergrößern.

Eine besonders stabile Halterung des Radialabschnitts der Lagerbuchse im Gehäuseteil aus Kunststoff ist dadurch erreicht, dass der Radialabschnitt an dessen Rand Ausklinkungen aufweist, die diesem etwa eine Sternform verleihen. Alternativ kann der Radialabschnitt als äußere Kontur beispielsweise auch eine Wellenform oder eine sonstige Form aufweisen, die die vom Kunststoff umspritzte Länge vergrößert. Ein vergleichbarer Effekt ist auch durch Lochungen des Radialabschnitts oder durch eine Kombination von Lochungen und randseitigen Ausklinkungen erreichbar.

Die zur Lagerung der inneren Welle vorgesehene erste Lagerstelle ist entweder direkt durch die metallene Oberfläche der Lagerbuchse oder durch Kunststoff gebildet. Im letztgenannten Fall kann es sich um den Kunststoff des Gehäuseteils und/oder eine Kunststoffummantelung der Lagerbuchse handeln, wobei eine Ummantelung aus Kunststoff in bevorzugter Weise einstückig mit dem Gehäuseteil ausgebildet ist. Eine besonders stabile Verbindung zwischen innerhalb und außerhalb des Radialabschnitts angeordneten Volumenbereichen aus Kunststoff ist vorzugsweise dadurch hergestellt, dass die Lagerbuchse, insbesondere deren Radialabschnitt, vom Kunststoff durchdrungene Ausnehmungen aufweist.

Als äußeres rotierbares Teil ist beispielsweise ein Zahnrad und/oder eine Hohlwelle vorgesehen. Die Lagerung an der Lagerbuchse erfolgt hierbei analog der inneren Welle entweder direkt an einer metallenen Oberfläche der Lagerbuchse oder an einer Kunststoffummantelung, wobei in jedem Fall zusätzlich zu einer radialen Führung auch eine axiale Führung vorgesehen sein kann. Eine Axialsicherung für ein auf dem Ringabschnitt gelagertes Zahnrad ist vorzugsweise einteilig mit dem Ringabschnitt ausgebildet. Hierbei ist in fertigungstechnisch besonders einfacher Weise bevorzugt eine Biegefeder aus dem Ringabschnitt ausgeformt, über welche das Zahnrad bei der Montage geschoben wird. Damit ist ein Freistich für einen Sicherungsring zur axialen Sicherung des Zahnrads nicht erforderlich.

Der Vorteil der Erfindung liegt insbesondere darin, dass eine einzige aus Metall gefertigte Lagerbuchse als mehrfache Lagerstelle für in einem Gehäuse, insbesondere eines Getriebes, koaxial rotierbare Teile dient, wobei eine besonders gleichmäßige, Spannungsspitzen vermeidende Krafteinleitung von der Lagerbuchse in ein Gehäuseteil aus Kunststoff mittels eines normal zur Drehachse der Teile angeordneten Radialabschnitts der Lagerbuchse, welcher in das Gehäuseteil aus Kunststoff eingespritzt ist, gegeben ist. Die Erfindung kombiniert damit die spezifischen Vorteile von Kunststoff, insbesondere hinsichtlich der Formgebung, mit den Vorteilen metallischer Werkstoffe in Bezug auf Festigkeit und Verschleiß.

Mehrere Ausführungsbeispiele der Erfindung werden nachfolgend anhand einer Zeichnung näher erläutert. Hierin zeigen:
- FIG 1: in perspektivischer Ansicht eine Lagerbuchse,
- FIG 2: ausschnittsweise eine Anordnung mit einem Gehäuseteil, einer Lagerbuchse sowie einer inneren Welle,
- FIG 3: ausschnittsweise eine Anordnung mit einem Gehäuseteil, einer Lagerbuchse, einer inneren Welle sowie einem äußeren rotierenden Teil,
- FIG 4: ausschnittsweise eine Anordnung mit einem Gehäuseteil, einer Lagerbuchse, einer inneren Welle und zwei äußeren rotierenden Teilen, und
- FIG 5: in schematischer Querschnittsdarstellung eine Lagervorrichtung mit kunststoffummantelter Lagerbuchse sowie
- FIG 6: die Lagerbuchse in perspektivischer Ansicht.

Einander entsprechende oder gleichwirkende Teile sind in allen Figuren mit den selben Bezugszeichen versehen.

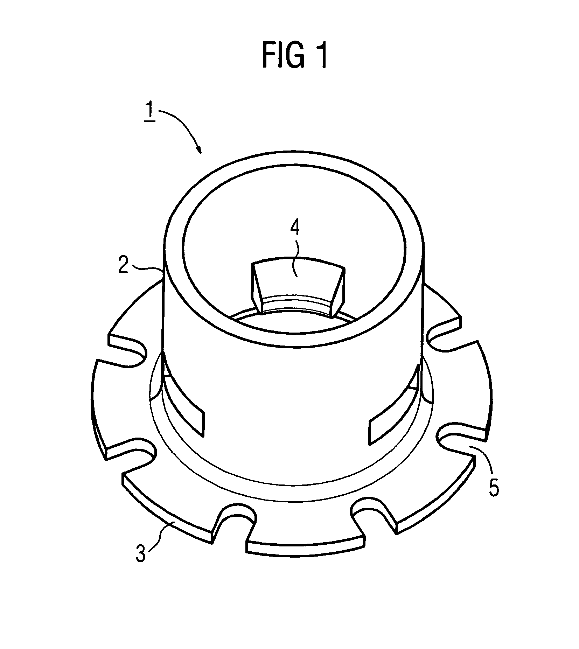

Die Figur 1 zeigt eine aus Metall gefertigte Lagerbuchse 1 einer hier nicht weiter dargestellten Lagervorrichtung eines Getriebes, beispielsweise für einen elektromechanischen Gurtstraffer, einen Fensterheber- oder Schiebetürantrieb in einem Kraftfahrzeug oder auch einen Rolladenantrieb für die Gebäudetechnik.

Die Lagerbuchse 1 ist beispielsweise als Stanz-Biegeteil aus Blech, als Drehteil oder als Sinterteil hergestellt und umfasst einen etwa zylindermantelförmigen Ringabschnitt 2 sowie einen hieran rechtwinklig anschließenden Radialabschnitt 3. Der Ringabschnitt 2 weist drei gleichförmig über den Umfang verteilte Sicken 4 auf, welche einstückig aus dem Metall der Lagerbuchse 1 geformt sind und der Lagerung einer hier nicht dargestellten Achse dienen, die sich in Richtung der Symmetrieachse der Lagerbuchse 1 erstreckt. Alternativ ist beispielsweise auch eine einzige umlaufende Sicke im Ringabschnitt 2 realisierbar. Durch mehrere solcher ringförmiger Sicken kann eine Abdichtung gegenüber der Welle in der Art einer Labyrinthdichtung gestaltet werden.

Der an den Ringabschnitt 2 anschließende Radialabschnitt 3 ist zur Befestigung in oder an einem Kunststoffgehäuse, insbesondere zum Einspritzen in ein Kunststoffgehäuse, vorgesehen. Mehrere, im Ausführungsbeispiel nach Figur 1, am Umfang des Radialabschnitts 3 angeordnete Ausklinkungen 5 dienen der Vergrößerung der mit Kunststoff umspritzten Länge der Lagerbuchse 1 und damit der Erhöhung der auf das Kunststoffgehäuse übertragbaren Kräfte.

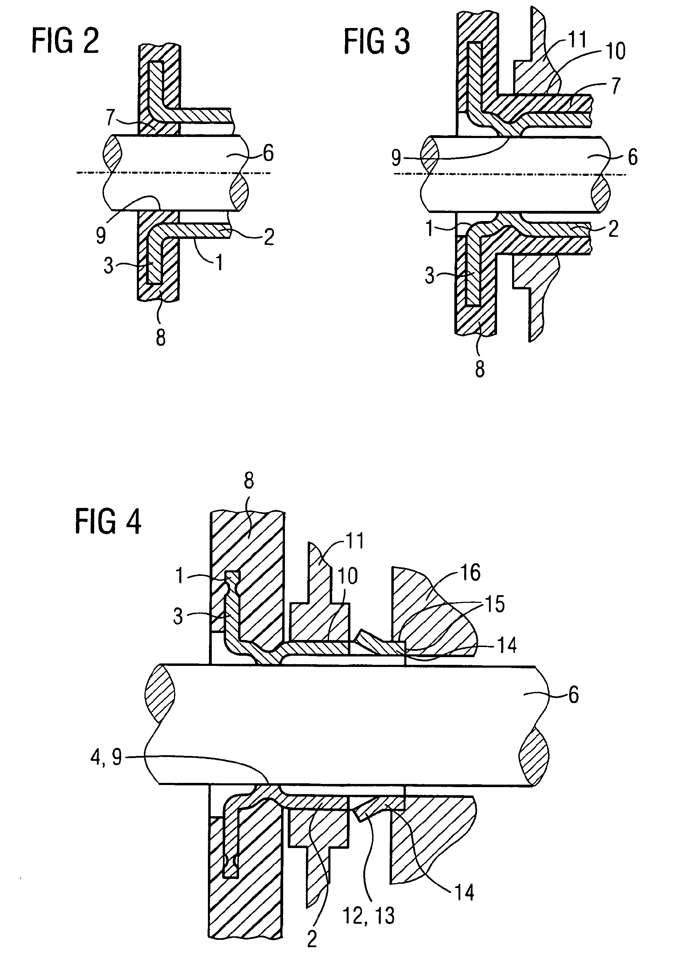

Die Halterung einer Lagerbuchse 1 ähnlich der in Figur 1 dargestellten Ausführungsform ist aus Figur 2 ersichtlich. Abweichend vom Ausführungsbeispiel nach Figur 1 ist hierbei die Lagerung einer Welle 6, im weiteren auch als innere Welle bezeichnet, nicht unmittelbar an der Lagerbuchse 1 sondern an einer Ummantelung 7 aus Kunststoff vorgesehen. Die Ummantelung 7, an welcher die innere Welle 6 an einer ersten Lagerstelle 9 gelagert ist, bildet hierbei zugleich einen Teil eines Gehäuseteils 8 eines nicht weiter dargestellten Getriebes. Im mittels Kunststoffspritzguss hergestellten Gehäuseteil 8 ist der Radialabschnitt 3 vollständig eingespritzt, während der Ringabschnitt 2 größtenteils außerhalb des Gehäuseteils 8 angeordnet ist. Durch die Ausdehnung des Radialabschnitts 3 rechtwinklig zur Erstreckung der Welle 6 erfolgt ohne zusätzlichen Bauraum im Gehäuse eine großflächige Krafteinleitung in das Gehäuseteil 8, wobei Kerbspannungen von der mechanisch stabilen, aus Metall gefertigten Lagerbuchse 1, insbesondere deren Radialabschnitt 3, getragen werden.

Das Ausführungsbeispiel nach Figur 3 zeigt eine Lagervorrichtung mit einer Lagerbuchse 1, an deren Oberfläche aus Metall, nämlich an der eine erste Lagerstelle 9 bildenden Sicke 4, die Welle 6 direkt gelagert ist. Eine zweite Lagerstelle 10 für ein Zahnrad 11 als weiteres rotierbares Teil ist durch eine außenseitige Ummantelung 7 des Ringabschnitts 2 der Lagerbuchse 1 gegeben. Ähnlich wie im Ausführungsbeispiel nach Figur 2, in welchem die Ummantelung 7 die erste Lagerstelle 9 bildet, ist auch im Ausführungsbeispiel nach Figur 3 die Ummantelung 7 einstückig mit dem Gehäuseteil 8 des Getriebes ausgebildet.

Ein weiters Ausführungsbeispiel einer Lagervorrichtung zeigt die Figur 4. Hierbei sind sowohl die innere Welle 6 als auch das Zahnrad 11 unmittelbar an einer inneren bzw. äußeren metallenen Oberfläche des Ringabschnitts 2 der Lagerbuchse 1 gelagert. Eine Axialsicherung 12 für das Zahnrad 11 ist durch Biegefedern 13 gebildet, welche aus dem Metall des Ringabschnitts 2 herausgebogen sind. Am dem Radialabschnitt 3 abgewandten vorderen Ende 14 der Lagerbuchse 1 ist eine dritte Lagerstelle 15 für die axiale und radiale Lagerung einer Hohlwelle 16 als drittem rotierbarem Teil gebildet. Somit hat die Lagerbuchse 1 die Funktion einer Mehrfachlagerstelle für die axiale und/oder radiale Lagerung einer Mehrzahl an Zahnrädern und/oder Wellen.

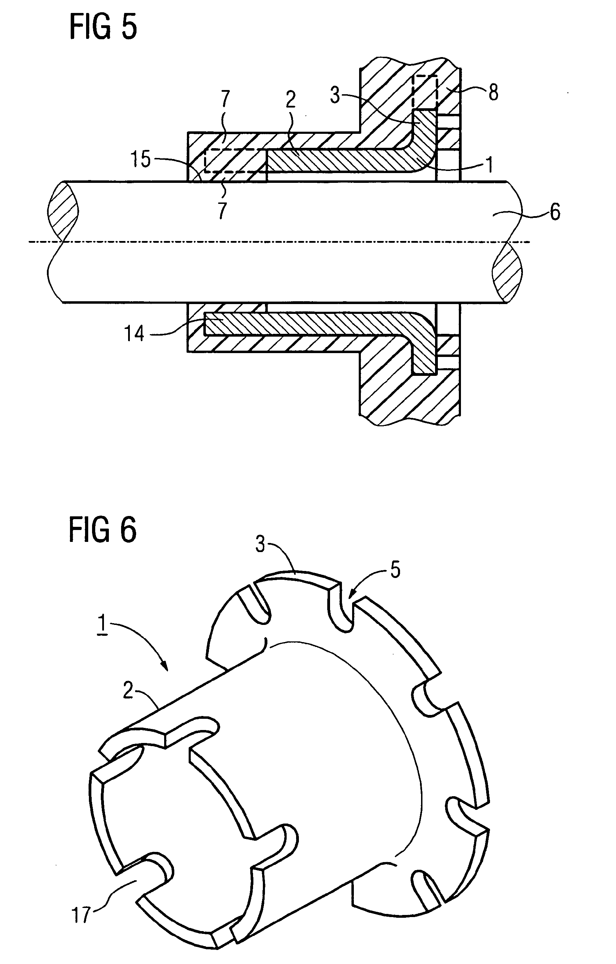

Im Ausführungsbeispiel nach den Figuren 5 und 6 ist die innere Welle 6 nicht im Bereich des Radialabschnitts 3 sondern am vorderen Ende 14 des Ringabschnitts 2 gelagert. Die Ummantelung 7, welche auch in diesem Fall einstückig mit dem Gehäuseteil 8 ausgebildet ist, durchdringt hierbei Ausnehmungen 17 am vorderen Ende 14 des Ringabschnitts 2. Der umgebbördelte sternförmige Radialabschnitt 3 entspricht im wesentlichen dem Ausführungsbeispiel nach Figur 1 und ermöglicht damit eine großflächige und dennoch raumsparende Krafteinleitung in das Gehäuseteil 8 aus Kunststoff.

## Patentansprüche

1. Lagervorrichtung, insbesondere für ein Getriebe, mit einem Gehäuseteil (8) aus Kunststoff,
einer Lagerbuchse (1) mit einem im Wesentlichen zylindermantelförmigen Ringabschnitt (2) sowie einem an diesen anschließenden, im Gehäuseteil (8) gehaltenen Radialabschnitt (3),
einer in der Lagerbuchse (1) an einer ersten Lagerstelle (9) geführten inneren Welle (6),
einem an einer zweiten Lagerstelle (10) der Lagerbuchse (1) geführten, die innere Welle umschließenden zweiten rotierbaren Teil (11,16), **dadurch**
**gekennzeichnet, dass** die Lagerbuchse (1)
als Metallbuchse ausgebildet ist, dass zumindest der Radialabschnitt der Lagerbuchse (1) in das Gehäuseteil (8) eingespritzt ist und dass die Lagerbuchse (1) am Radialabschnitt (3)eine durch Ausklinkungen (5) an dessen Rad und/oder Lochungen des Radialabschnittes gestaltete Form aufweist, die die vom Kunststoff umspritzte Länge verändert.

2. Lagervorrichtung nach Anspruch 1,
**dadurch gekennzeichnet, dass** der Ringabschnitt (2) zur Ausbildung der ersten Lagerstelle (9) eine Sicke (4) aufweist.

3. Lagervorrichtung nach einem der Ansprüche 1 oder 2,
**dadurch gekennzeichnet, dass** die Lagerbuchse (1) zur Ausbildung der ersten Lagerstelle (9) eine Ummantelung (7) aus Kunststoff aufweist.

4. Lagervorrichtung nach Anspruch 3,
**dadurch gekennzeichnet, dass** die Ummantelung (7) einstückig mit dem Gehäuseteil (8) ausgebildet ist.

5. Lagervorrichtung nach Anspruch 3 oder 4,
**dadurch gekennzeichnet, dass** die Lagerbuchse (1) im Bereich der ersten Lagerstelle (9) von der Ummantelung (7) durchdrungene Ausnehmungen (17) aufweist.

6. Lagervorrichtung nach einem der Ansprüche 1 bis 5,
**gekennzeichnet durch** ein auf dem Ringabschnitt (2) gelagertes Zahnrad (11).

7. Lagervorrichtung nach Anspruch 6,
**gekennzeichnet durch** eine einteilig mit dem Ringabschnitt (2) ausgebildete Axialsicherung (12) für das Zahnrad (11).

8. Lagervorrichtung nach Anspruch 7,
**dadurch gekennzeichnet, dass** die Axialsicherung (12) als Biegefeder (13) ausgebildet ist.

9. Getriebe mit einer Lagervorrichtung nach einem der Ansprüche 1 bis 8.

## Claims

1. Bearing device, especially for a gear, with
a housing part (8) made from plastic,
a bearing shell (1) with an essentially cylindrical sheath-shaped ring section (2) as a radial section (3) adjoining this, held in the housing part (8),
an inner shaft (6) guided in the bearing shell (1) on a first journal (9),
a second rotatable part (11, 16) surrounding the inner shaft, guided on a second journal (10) of the bearing shell (1), **characterized in that** the bearing shell (1) is embodied as a metal shell, that at least the radial section of the bearing shell (1) is injection-moulded into the housing part (8) and that the bearing shell (1) on the radial section (3) has a form produced by notches (5) on its edge and/or holes of the radial section, which changes the length enclosed by the plastic moulding.

2. Bearing device according to claim 1,
**characterized in that** the ring section (2) features a bead (4) to form the first journal (9).

3. Bearing device according to one of the claims 1 or 2,
**characterized in that** the bearing shell (1) features a sheath (7) made from plastic to form the first journal (9).

4. Bearing device according to claim 3,
**characterized in that** the sheath (7) is formed in one piece with the housing part (8).

5. Bearing device according to claim 3 or 4,
**characterized in that** the bearing shell (1) features, in the area of the first journal (9) cutouts (17) penetrated by the sheath (7).

6. Bearing device according to one of the claims 1 to 5,
**characterized by** a toothed wheel (11) supported on the ring section (2).

7. Bearing device according to claim 6,
**characterized by** an axial locking part (12) for the toothed wheel (11) embodied in one piece with the ring section (2).

8. Bearing device according to claim 7,
**characterized in that** the axial locking part (12) is embodied as a bent spring (13).

9. Gear with a bearing device according to one of the claims 1 to 8.

## Revendications

1. Ensemble de palier, en particulier pour une transmission, avec un élément de carter (8) en matière plastique, une douille de palier (1) avec un segment d'anneau (2) essentiellement en forme de corps de cylindre ainsi qu'un segment radial (3) se raccordant à ce dernier et maintenu dans l'élément de carter (8), un arbre intérieur (6) guidé dans la douille de palier (1) au niveau d'un premier point d'appui (9), une deuxième pièce rotative (11, 16) guidée au niveau d'un deuxième point d'appui (10) de la douille de palier (1) et entourant l'arbre intérieur, **caractérisé en ce que** la douille de palier (1) est conçue comme une douille métallique, **en ce qu'**au moins le segment radial de la douille de palier (1) est injecté dans l'élément de carter (8) et **en ce que** la douille de palier (1) présente sur le segment radial (3) une forme avec des entailles (5) sur son bord et/ou des perforations, laquelle forme modifie la longueur enrobée par injection de matière plastique.

2. Ensemble de palier selon la revendication 1, **caractérisé en ce que** le segment d'anneau (2) présente une moulure (4) destinée à former le premier point d'appui (9).

3. Ensemble de palier selon l'une des revendications 1 ou 2, **caractérisé en ce que** la douille de palier (1) présente un enrobage (7) en matière plastique destiné à former le premier point d'appui (9).

4. Ensemble de palier selon la revendication 3, **caractérisé en ce que** l'enrobage (7) est formé d'un seul tenant avec l'élément de carter (8).

5. Ensemble de palier selon la revendication 3 ou 4, **caractérisé en ce que** la douille de palier (1) présente, dans la région du premier point d'appui (9), des évidements (17) traversés par l'enrobage (7).

6. Ensemble de palier selon l'une quelconque des revendications 1 à 5, **caractérisé par** une roue dentée (11) logée sur le segment d'anneau (2).

7. Ensemble de palier selon la revendication 6, **caractérisé par** une sécurité axiale (12) formée d'un seul tenant avec le segment d'anneau (2) et destinée à la roue dentée (11).

8. Ensemble de palier selon la revendication 7, **caractérisé en ce que** la sécurité axiale (12) est conçue sous forme de ressort de flexion (13).

9. Transmission avec un ensemble de palier selon l'une quelconque des revendications 1 à 8.
